Europäisches Patentamt

European Patent Office

Office européen des brevets

(19)

(11) Publication number: **0 079 407**
**B1**

(12) **EUROPEAN PATENT SPECIFICATION**

(45) Date of publication of patent specification: **29.05.85**

(51) Int. Cl.⁴: **C 01 B 31/32**

(21) Application number: **81305406.1**

(22) Date of filing: **16.11.81**

(54) Method for preparing a calcium carbide product.

(43) Date of publication of application:
**25.05.83 Bulletin 83/21**

(45) Publication of the grant of the patent:
**29.05.85 Bulletin 85/22**

(84) Designated Contracting States:
**AT BE CH DE FR GB IT LI LU NL SE**

(56) References cited:
**EP-A-0 021 748**
**EP-A-0 034 572**
**US-A- 862 092**
**US-A-2 860 037**

(73) Proprietor: **KEMGAS INTERNATIONAL**
**10 West Broadway Suite 300**
**Salt Lake City Utah 84101 (US)**

(72) Inventor: **Hayes, Edward Oscar**
**c/o 6021 N. 81st Place**
**Scottsdale Arizona 85253 (US)**

(74) Representative: **Grundy, Derek George Ritchie et al**
**CARPMAELS & RANSFORD 43, Bloomsbury Square**
**London WC1A 2RA (GB)**

Courier Press, Leamington Spa, England.

## Description

### Field of the Invention

The present invention relates to a method of producing a solid substance which upon contact with water liberates a gaseous fuel product. While not wishing to be so limited, it appears that the method of the present invention provides a new process for producing calcium carbide.

### Background of the Invention

Calcium carbide has long been known for its reactivity with water resulting in the evolution of acetylene gas. Heretofore, the production of calcium carbide has been carried out by directly reacting carbon with calcium oxide in an electric furnace as described by Cotton and Wilkinson, "Advanced Inorganic Chemistry", Third Edition, 216 (1972). Due to the high energy costs of such methods, the production of calcium carbide has been restricted. In addition, while the making of acetylene gas from the reaction of water with calcium carbide has long been known, such processes have been limited not only by the cost of carbide but the undesirous by-product, lime, which is formed.

Recently, an improved method for generating an acetylene base fuel gas has been described in our European Patent Application No. 21748, titled "PROCESS FOR PRODUCING AN ACETYLENE BASE FUEL GAS". With the advent of such new means of generating a relatively safe, stable energy rich acetylene based fuel gas, a more economical means for producing calcium carbide is needed.

Accordingly, it is the primary object of the present invention to provide a means of producing a substance which will react with water to produce an acetylene based fuel gas.

It is a further object of the present invention to provide an economical means for reacting calcium oxide and carbon to produce a product having the properties of calcium carbide without the use of an electric furnace.

These and other objects of the present invention will be more apparent from the description which follows.

### Summary of the Invention

According to the present invention, there is provided a method for the production of calcium carbide by reacting a uniform mixture of finely divided calcium oxide and carbon with pyrophosphoric acid ($H_4P_2O_7$).

At the outset, while not wishing to be limited to any theoretical or empirical explanation, it should be noted that as used herein the product "calcium carbide" refers to the product of reacting calcium oxide, carbon and pyrophosphoric acid according to the present invention, which product is believed to be composed chiefly or in total of $CaC_2$. Indeed, the calcium carbide product of the present invention readily reacts in the presence of water to generate an acetylene base fuel gas, suitable for burning in an internal combustion engine or power plant as described in our aforementioned European application No. 21748.

### Detailed Description of the Invention

Calcium carbide is produced by reacting a uniform mixture of finely divided calcium oxide and carbon with pyrophosphoric acid. The reaction is carried out preferably by addition of pyrophosphoric acid to the uniform mixture in an amount sufficient to form a paste like mass which under pressure results in a product which on drying is a hard mass.

Calcium oxide is readily available from limestone deposits. Suitable carbon sources include coal, coke and charcoal. Both the calcium oxide and carbon should be in a finely divided state to ensure a complete and uniform reaction. If necessary, these materials may be ground separately or in combination. Suitably, the materials are ground to about 60 mesh (0.25 mm) or finer.

After forming a uniform mixture of finely divided calcium oxide and cargon, pyrophosphoric acid is added in an amount sufficient to form a paste of the mixture (generally from 20 to 250% $H_4P_2O_7$ based on the weight of the mixture is sufficient). Upon addition of the acid, the mixture immediately begins to exotherm with the generation of water vapor.

Most suitably the acid is added to the mixture in a confined reaction space, and simultaneously or as quickly as possible after addition of the acid, the resulting paste is subjected to pressure by way of physical compaction (e.g. by a ram, disc, etc.). After the reaction is complete, as indicated by a cooling of the compacted mass, pressure is removed. After drying, one obtains a hard mass of calcium carbide, i.e. in the form of a pressed cake.

The hard mass of calcium carbide may be subjected to further processing to obtain particles or granules of desired size and shape. Preferably, the hard mass is crushed by rollers and physically treated and screened to a uniform particle size. A particularly desirable particle size is 0.25 inch mesh (6.35 mm).

In order to enhance the capability of the calcium carbide to be stored without deterioration, it is preferred to stabilize the calcium carbide particles so as to render the same impermeable to air and moisture. This is accomplished by coating the particles of calcium carbide with a film, impervious to air and moisture, preferably composed of nitrocellulose and a polyester resin. In carrying out such a process, one merely contacts the particles of calcium carbide with a slurry of nitrocellulose and polyester resin in a suitable organic solvent such as acetone, isopropyl alcohol or mixtures thereof. After contacting the calcium carbide particles with the slurry, the excess slurry is drained and the particles may be dried, for example in a convection dryer, to yield particles having a film thereon impermeable to air and moisture. While the resulting coated particles are impermeable to air and moisture, upon contact with aqueous liquid activator reagent of the invention described in my above mentioned European patent application No. 21748 the coating is broken down or dissolved and reaction occurs to generate the desired acetylene base fuel gas.

An example of a suitable slurry for coating the carbide granules is:

| | |
|---|---|
| Nitrocellulose-RS | 10% |
| Santolite (aromatic sulfonamide-formaldehyde alkyd resin) | 10% |
| Dibutylphthalate | 2% |
| Ethyl alcohol | 5% |
| Ethyl acetate | 34% |
| Toluene | 39% |
| | —— |
| | 100%. |

The following example is offered to more fully illustrate the invention, but is not to be construed as limiting the scope thereof.

### Example

Into a stainless steel cylinder is placed a uniformly blended mixture of 56 grams of calcium oxide (60 mesh = 0.25 mm) and charcoal (60 mesh = 0.25 mm). To the mixture is added 25 grams of pyrophosphoric acid with stirring to form a pasty mass which is then compressed with a rod piston adapted to fit the inside of the reaction cylinder.

The exothermic reaction is allowed to run its course and after cooling (about 15—20 minutes) the piston is removed from the cylinder together with the hard cake of calcium carbide.

The calcium carbide so produced, after crushing to a uniform particle size of 0.25 inch (6.35 mm) mesh and placing in water, reacts to generate an acetylene base fuel gas.

### Claims

1. A method for the production of calcium carbide which comprises reacting a uniform mixture of finely divided calcium oxide and finely divided carbon with pyrophosphoric acid under pressure.

2. A method according to claim 1, wherein said calcium oxide and carbon each have a particle size of 60 mesh (0.25 mm) or finer.

3. A method according to claim 1, wherein said carbon is derived from a source selected from the group consisting of coal, coke and charcoal.

4. A method according to claim 1, wherein stoichiometric amounts of calcium oxide and carbon are reacted.

5. A method according to claim 1, wherein the amount of pyrophosphoric acid present is sufficient to form a shape retaining paste of said mixture.

6. A method according to claim 1, wherein said mixture comprises from about 60 to 80 percent calcium oxide and 20 to 40 percent carbon.

7. A method for the production of calcium carbide which comprises the steps:

a) forming a uniform mixture comprising from 60 to 80 percent calcium oxide and 20 to 40 percent carbon, each having a particle size of 60 mesh (0.25 mm) or finer;

b) simultaneously adding to said mixture an amount of pyrophosphoric acid sufficient to form a paste of said mixture and subjecting the paste to pressure in a closed reactor; and

c) allowing the reaction product of step b) to dry to a hard mass.

8. A method according to claim 7, comprising the further step d) wherein the hard mass is subjected to crushing and screening to provide a hard granule-like product of uniform size.

9. A method according to claim 7 or 8 wherein the source of carbon is selected from the group consisting of coal, coke and charcoal.

10. A method according to claim 1 or 7 wherein the amount of pyrophosphoric acid added ranges from about 20 to 250 percent by weight of the uniform mixture.

### Patentansprüche

1. Verfahren zur Herstellung von Calciumcarbid, dadurch gekennzeichnet, daß eine gleichförmige Mischung von feinteiligem Calciumoxid und feinteiligem Kohlenstoff mit Pyrophosphorsäure unter Druck umgesetzt wird.

2. Verfahren nach Anspruch 1, dadurch gekennzeichnet, daß das Calciumoxid und der Kohlenstoff jeweils eine Teilchengröße von 0,25 mm oder weniger besitzen.

3. Verfahren nach Anspruch 1, dadurch gekennzeichnet, daß der Kohlenstoff aus einer Quelle ausgewählt aus der Gruppe bestehend aus Kohle, Koks und Holzkohle stammt.

4. Verfahren nach Anspruch 1, dadurch gekennzeichnet, daß stöchiometrische Mengen von Calciumoxid und Kohlenstoff umgesetzt werden.

5. Verfahren nach Anspruch 1, dadurch gekennzeichnet, daß die vorhandene Menge an Pyrophosphorsäure ausreicht, um eine formbeständige Paste aus der Mischung zu bilden.

6. Verfahren nach Anspruch 1, dadurch gekennzeichnet, daß die Mischung 60 bis 80 % Calciumoxid und 20 bis 40 % Kohlenstoff enthält.

7. Verfahren zur Herstellung von Calciumcarbid, dadurch gekennzeichnet, daß:

a) eine gleichförmige, 60 bis 80 % Calciumoxid und 20 bis 40 % Kohlenstoff enthaltende Mischung hergestellt wird, wobei Calciumoxid und Kohlenstoff jeweils eine Teilchengröße von 0,25 mm oder weniger besitzen,

b) der Mischung eine zur Bildung einer Paste aus dieser Mischung ausreichende Menge Pyrophosphorsäure zugesetzt wird und gleichzeitig die Paste in einem geschlossenen Reaktor Druck ausgesetzt wird und

c) dem Reaktionsprodukt aus Stufe b) gestattet wird, zu einer harten Masse zu trocknen.

8. Verfahren nach Anspruch 7, dadurch gekennzeichnet, daß es die zusätzliche Stufe d) aufweist, in der die harte Masse zerkleinert und gesiebt wird, um ein hartes granulatähnliches Produkt mit gleichförmiger Größe zu liefern.

9. Verfahren nach Anspruch 7 oder 8, dadurch gekennzeichnet, daß die Kohlenstoffquelle ausgewählt ist aus der Gruppe bestehend aus Kohle, Koks und Holzkohle.

10. Verfahren nach Anspruch 1 oder 7, dadurch gekennzeichnet, daß die Menge an zugesetzter Pyrophosphorsäure bezogen auf das Gewicht der gleichförmigen Mischung im Bereich von etwa 20 bis 250 Gew.% liegt.

**Revendications**

1. Procédé pour la production d'un carbure de calcium, qui comprend la réaction, sous pression, d'un mélange uniforme d'oxyde de calcium finement divisé et de carbone finement divisé avec de l'acide pyrophosphorique.

2. Procédé selon la revendication 1, dans lequel l'oxyde de calcium et le carbone ont chacun une dimension particulaire de 60 mailles (0,25 mm) ou plus fine.

3. Procédé selon la revendication 1, dans lequel ledit carbone provient d'une source choisie dans l'ensemble constitué par du charbon, du coke et du charbon de carbonisation.

4. Procédé selon la revendication 1, dans lequel on fait réagir des quantités stoéchiométriques d'oxyde de calcium et de carbone.

5. Procédé selon la revendication 1, dans lequel la quantité d'acide pyrophosphorique présent est suffisante pour former une pâte dudit mélange conservant sa forme.

6. Procédé selon la revendication 1, dans lequel ledit mélange comprend environ 60 à 80 % d'oxyde de calcium et 20 à 40 % de carbone.

7. Procédé pour la production de carbure de calcium, qui comprend les étapes consistant à:

a) former un mélange uniforme comprenant de 60 à 80 % d'oxyde de calcium et de 20 à 40 % de carbone, chacun ayant une dimension particulaire de 60 mailles (0,25 mm) ou plus fine;

b) ajouter simultanément audit mélange une quantité d'acide pyrophosphorique suffisante pour former une pâte dudit mélange et à soumettre la pâte à une pression dans un réacteur clos; et

c) laisser le produit de la réaction de l'étape (b) sécher en une masse dure.

8. Procédé selon la revendication 7, comprenant l'étape d) supplémentaire dans laquelle on soumet la masse dure à un concassage et à un tamisage pour obtenir un produit dur analogue à des granules de dimension uniforme.

9. Procédé selon la revendication 7 ou 8, dans lequel on choisit la source de carbone dans l'ensemble constitué par du charbon, du coke et du charbon de carbonisation.

10. Procédé selon la revendication 1 ou 7, dans lequel la quantité d'acide pyrophosphorique ajouté se situe entre environ 20 et 250 % du poids du mélange uniforme.